# EUROPÄISCHE PATENTSCHRIFT

(11) **EP 4 550 999 B1**
(45) Veröffentlichungstag und Bekanntmachung des Hinweises auf die Patenterteilung: **29.04.2026**
(21) Anmeldenummer: 23731192.3
(22) Anmeldetag: 06.06.2023
(51) Int. Cl.: A01C 5/08, A01C 7/20, A01C 5/06

(54) **VERFAHREN ZUR REGELUNG DER LAUFRUHE EINER SCHAREINHEIT**
METHOD FOR CONTROLLING THE SMOOTH RUNNING OF A SEED COULTER UNIT
PROCÉDÉ DE COMMANDE DU FONCTIONNEMENT RÉGULIER D'UNE UNITÉ DE SOC DE SEMIS

(30) Priorität: 06.07.2022 DE 102022116842
(43) Veröffentlichungstag der Anmeldung: 14.05.2025
(73) Patentinhaber: Amazonen-Werke H. Dreyer SE & Co. KG, 49205 Hasbergen (DE)
(72) Erfinder: HENKE, Christian, 30938 Burgwedel (DE); KOCH, Jens, 29525 Uelzen (DE)
(74) Vertreter: Grünecker Patent- und Rechtsanwälte PartG mbB
(86) Internationale Anmeldenummer: PCT/EP2023/065027
(87) Internationale Veröffentlichungsnummer: WO 2024/008374

(56) Entgegenhaltungen:
- EP-A1- 3 732 947
- WO-A1-2008/086318
- US-A1- 2016 165 789

## Beschreibung

Die Erfindung betrifft ein Verfahren zur Regelung der Laufruhe einer einen Säschar, und vorzugsweise eine Laufrolle, aufweisenden Schareinheit, die zur Erzeugung einer Säfurche über das Säschar mit einem einstellbaren Schardruck auf eine landwirtschaftliche Nutzfläche gedrückt, und, insbesondere über die Laufrolle, mit einer Fahrgeschwindigkeit über die landwirtschaftliche Nutzfläche bewegt wird, bei welchem eine auf die Schareinheit, insbesondere auf die Laufrolle, einwirkende Scharkraft gemessen wird. Ein weiterer Gegenstand der Erfindung ist eine Sämaschine mit einer Regelung der Laufruhe.

Schareinheiten kommen vielfach als Komponenten von Sämaschinen zum Ausbringen von Saatgut auf landwirtschaftlichen Nutzflächen zum Einsatz. Entsprechende Sämaschinen werden zum Ausbringen des Saatguts in der Regel mit einer gewissen Fahrgeschwindigkeit entlang im Wesentlichen parallel zueinander verlaufenden Bahnen über die landwirtschaftliche Nutzfläche gefahren, wozu diese üblicherweise an Zugmaschinen, wie beispielsweise Traktoren, angehängt oder angebaut sind.

WO 2008/086318 A1 offenbart ein Überwachungssystem für Pflanzmaschinen und ein Verfahren dazu.

In der Regel weist eine Sämaschine an deren hinteren Ende mehrere, quer zur Fahrtrichtung parallel zueinander angeordnete Schareinheiten zur Ablage des Saatguts in parallelen Saatreihen auf. Eine Schareinheit umfasst üblicherweise ein Säschar zur Erzeugung einer Säfurche in der landwirtschaftlichen Nutzfläche. Das in der Regel meißel- oder schneidmesserartige Säschar wird hierfür oftmals derart mit einem in Richtung der Nutzfläche wirkenden Schardruck beaufschlagt, dass dieses eine sich in Fahrtrichtung hinter der Sämaschine erstreckende, rinnen- oder rillenartige Säfurche erzeugt. In diese Säfurche kann das Saatgut abgelegt werden, wobei die Tiefe der Säfurche die Ablagetiefe des Saatguts bestimmt. Zum verbesserten Lauf, etwa bei höheren Fahrgeschwindigkeiten der Sämaschine, weisen qualitativ hochwertige Schareinheiten in der Regel auch eine auf der Nutzfläche laufende Laufrolle auf.

Um eine gleichmäßige Ablagetiefe des Saatguts sicherzustellen, weisen Sämaschinen in der Regel zudem eine Schardruckregelung auf, über welche der auf die Schareinheit wirkende Schardruck geregelt werden kann. Die Regelung des Schardrucks erfolgt oftmals dergestalt, dass eine in Abhängigkeit verschiedener Faktoren, wie etwa dem Saatgut oder der Beschaffenheit der Nutzfläche voreingestellte Ablagetiefe des Saatguts möglichst gleichmäßig eingehalten wird.

Als Eingangsgröße für die Regelung des Schardrucks wird üblicherweise die auf die Schareinheit einwirkende Scharkraft genutzt. Zur Ermittlung der Scharkraft sind aus dem Stand der Technik verschiedene Konzepte bekannt, wie etwa eine direkte, beispielsweise messtechnische, Erfassung der zwischen der Nutzfläche und der Schareinheit wirkenden Scharkraft an der Laufrolle.

Es hat sich in der Praxis herausgestellt, dass insbesondere bei hohen Fahrgeschwindigkeiten - welche zur Erzielung von hohen Flächenleistungen in der Praxis oftmals gewünscht sind - oder bei sich ändernden Beschaffenheiten der Nutzfläche die Laufruhe der Schareinheit einen Einfluss auf die Saatgutausbringung hat. Im Stand der Technik sind daher Regelungsverfahren des Schardrucks bekannt, welche neben der Scharkraft auch die Laufruhe berücksichtigen. Hierzu wird beispielsweise in der EP 3 732 947 A1 die Anordnung von Beschleunigungssensoren an der Schareinheit vorgeschlagen, über welche die Laufruhe zur Einbeziehung in die Schardruckregelung erfasst werden kann. In ähnlicher Weise ist aus der US 2016/0165789 A1 bekannt, neben einer Vielzahl weiterer Messaufnehmer und Sensoren auch an verschiedenen Bauteilen einer Sämaschine angeordnete Beschleunigungssensoren zur Regelung des Schardrucks zu nutzen. Hierbei wird die Beschleunigung der Schareinheit als Regelgröße eingesetzt.

Es hat sich in der Praxis jedoch als nachteilig erwiesen, dass die Verfahren zur Regelung der Laufruhe bzw. des Schardrucks unter Berücksichtigung von zusätzlichen Messwerten neben der Scharkraft, wie etwa Beschleunigungs daten, vergleichsweise komplex werden. Darüber hinaus haben sich die zusätzlich erforderlichen Messaufnehmer oder -fühler, wie etwa die Beschleunigungssensoren sowie deren Verkabelung, unter den oftmals rauen Bedingungen der Aussaat in freier Natur als störungsanfällig erwiesen.

Vor diesem Hintergrund stellt sich die Erfindung die **Aufgabe,** ein Verfahren zur Regelung der Laufruhe einer Schareinheit sowie eine Sämaschine mit einer Regelung der Laufruhe anzugeben, welche einfach ausgestaltet und zugleich störungsunanfällig sind.

Diese Aufgabe wird bei einem Verfahren der eingangs genannten Art durch die Merkmale des Patentanspruchs 1 **gelöst.** Vorteilhafte Weiterbildungen sind in den abhängigen Unteransprüchen angegeben.

Die Scharkraft wird zur Ermittlung eines zeitlichen Scharkraftverlaufs über ein Messintervall erfasst und eine Bandbreite des Scharkraftverlaufs wird als Regelgröße zur Regelung der Laufruhe verwendet. Eine derartige Ausgestaltung ermöglicht die Erfassung der Laufruhe ohne zusätzliche Sensoren, wodurch das Verfahren vereinfacht wird. Ferner erweist sich das Verfahren auch als störungsunanfälliger, da auf zusätzliche Beschleunigungssensoren verzichtet werden kann.

Vorzugsweise sind mehrere Schareinheiten gemeinsam an einem sich quer zur Fahrtrichtung erstreckenden Schwenkträger angeordnet, wobei die Schareinheiten gemeinsam mit einem einstellbaren Schardruck auf die landwirtschaftliche Nutzfläche gedrückt werden indem der Träger verdreht wird. Die auf eine Schareinheit wirkende Scharkraft kann durch Verdrehen des Trägers eingestellt werden. Eine Sämaschine kann mehrere solcher Schwenkträger umfassen.

Eine vorteilhafte Ausgestaltung sieht vor, dass die Bandbereite aus der Differenz zwischen einer maximalen Scharkraft und einer minimalen Scharkraft des Scharkraftverlaufs bestimmt wird. Eine solche Ausgestaltung ermöglicht eine zuverlässige Abdeckung des gesamten Spektrums an auftre tenden Scharkräften und eine effiziente Ermittlung der Bandbreite auf Basis einer einfachen Rechenoperation. In diesem Zusammenhang ist es vorteilhaft, dass die Bandbreite auf effiziente Art und Weise auf Grundlage von bereits vorhandenen, über das Messintervall erfassten Messwerten der Scharkraft bestimmt werden kann.

Darüber hinaus wird vorgeschlagen, dass die Regelung der Laufruhe über einen eine Regelstrecke aufweisenden Regelkreis mit dem Schardruck als Stellgröße erfolgt. Eine derartige Ausgestaltung ermöglicht eine schnelle Anpassung der Laufruhe während der Aussaat und damit eine effektive Anpassung der Laufruhe an sich ggf. wechselnde Gegebenheiten und Bedingungen der Aussaat. Ferner kann durch eine derartige Ausgestaltung eine zuverlässige Unterdrückung von auf die Schareinheit einwirkenden Störeinflüssen ermöglicht werden.

In diesem Zusammenhang wird vorgeschlagen, dass ein Grenzwert der Bandbreite als eine Führungsgröße des Regelkreises verwendet wird, welche zur Bestimmung einer Regelabweichung mit der Bandbreite verglichen wird. Eine derartige Ausgestaltung ermöglicht eine einfache Regelung in Abhängigkeit der Führungsgröße. Insbesondere kann durch die Verwendung des Grenzwerts der Bandbreite sichergestellt werden, dass dieser während der Aussaat nicht überschritten wird. Hierdurch können die aus einem übermäßig unruhigen Lauf resultierenden Belastungen auf die Schareinheit, wie etwa in Folge von Vibrationen, reduziert werden. Ferner kann sichergestellt werden, dass die Aussaat durch einen übermäßigen unruhigen Lauf beeinträchtigt wird.

In einer regelungstechnisch vorteilhaften Ausgestaltung wird die Regelabweichung einem Regler zugeführt, in welchem ein Wert des Schardrucks als Steuergröße gebildet wird. Der Schardruck hat sich in diesem Zusammenhang als ein auf konstruktiv vorteilhaft einfache Art und Weise zu regelnder Parameter herausgestellt. Insbesondere kann durch eine Anpassung des Schardrucks eine schnell wirkende Regelung der Laufruhe ermöglicht werden.

In einer vorteilhaften Weiterbildung wird vorgeschlagen, dass mindestens ein Parameter der Nutzfläche und/oder die Fahrgeschwindigkeit und/oder mindestens ein Scharparameter als Störgrößen berücksichtigt werden. Eine solche Ausgestaltung ermöglicht auf vorteilhafte Art und Weise die Berücksichtigung von auf die Laufruhe einwirkenden Einflussgrößen bei der Regelung der Laufruhe. Bei den Parametern der Nutzfläche kann es sich insbesondere um die Art und Feuchtigkeit des Bodens handeln. Bei den Scharparametern kann es sich beispielsweise um konstruktive Besonderheiten oder auch einen Verschleiß- oder Abnutzungszustand des Säschars handeln.

In einer vorteilhaften Weiterbildung des Verfahrens wird vorgeschlagen, dass ein Grenzwert der Scharkraft und/oder die Fahrgeschwindigkeit als Bedingung, insbesondere für den Regler, verwendet werden. Durch eine solche Ausgestaltung kann sichergestellt werden, dass weder die Scharkraft noch die Fahrgeschwindigkeit bei der Aussaat überschritten werden. Über die Begrenzung der maximalen Scharkraft kann sichergestellt werden, dass eine zulässige mechanische Belastung der Schareinheit nicht überschritten wird. Hierdurch kann etwa auch der Verschleiß der Schareinheit reduziert werden, wodurch eine Erhöhung der Lebensdauer der Schareinheit erreicht werden kann. Ferner ergibt sich für ausgewählte Saatgüter der Vorteil, dass der Boden nicht zu stark rückverfestigt wird, wodurch der Aufgang begünstigt ist. Auf der anderen Seite kann es auch vorteilhaft sein, einen Minimalwert für die Scharkraft vorzugeben, welcher nicht unterschritten werden darf. Über die Einhaltung eines Minimalwerts der Scharkraft kann beispielsweise eine korrekte Ablagetiefe für das Saatgut sichergestellt werden. Eine Begrenzung der Fahrgeschwindigkeit kann sich ebenfalls im Hinblick auf den Verschleiß der Schareinheit als vorteilhaft erweisen, da beispielsweise Vibrationen, welche verstärkt bei höheren Fahrgeschwindigkeiten auftreten können, reduziert werden können. Ferner kann durch die Festlegung einer maximalen Fahrgeschwindigkeit eine gleichmäßige Aussaat des Saatguts auf der Nutzfläche sichergestellt werden.

In diesem Zusammenhang wird vorgeschlagen, dass der Grenzwert der Bandbreite und/oder der Grenzwert der Scharkraft in einem Fahrmodus hinterlegt sind und durch Auswahl des Fahrmodus eingestellt werden. Eine solche Ausgestaltung ermöglicht eine bedienerfreundliche, fehlerunanfällige Einstellung der Grenzwerte der Bandbreite und/oder der Scharkraft durch Auswahl des Fahrmodus durch das Bedienpersonal, wie etwa den Fahrer der Zugmaschine. In dem Fahrmodus können beispielsweise die Art der Aussaat, Eigenschaften und/oder Beschaffenheiten des Saatguts sowie Parameter der Nutzfläche, wie etwa deren Bodenqualität, -feuchtigkeit oder -ebenheit o. Ä. hinterlegt sein.

In einer vorteilhaften Weiterbildung der Erfindung werden unterschiedliche Fahrmodi vorgeschlagen. Durch mehrere auszuwählende Fahrmodi kann die Bedienerfreundlichkeit weiter erhöht werden. Insbesondere erlaubt die Auswahl aus unterschiedlichen Fahrmodi eine schnelle Einstellung der Grenzwerte der Bandbreite und/oder der Scharkraft unter Vermeidung von Bedienerfehlern.

Es hat sich in diesem Zusammenhang als vorteilhaft erwiesen, wenn der Schardruck zur Verbesserung der Laufruhe erhöht wird, wenn die Bandbreite größer dem Grenzwert der Bandbreite und die Scharkraft kleiner oder gleich dem Grenzwert der Scharkraft ist. Hierdurch kann auf einfache und zuverlässige Art und Weise eine Verbesserung der Laufruhe bei gleichzeitiger Einhaltung der mechanischen Belastbarkeit der Schareinheit und begünstigtem Aufgang durch Vermeidung übermäßiger Verdichtung erreicht werden.

In diesem Zusammenhang wird vorgeschlagen, dass ein Verzögerungssignal zur Reduzierung der Fahrgeschwindigkeit erzeugt wird, wenn die Scharkraft größer als der Grenzwert der Scharkraft ist. Durch eine derartige Ausgestaltung kann sichergestellt werden, dass die tatsächlich auf die Schareinheit einwirkende Scharkraft nicht zu große Werte annimmt. Hierdurch kann eine übermäßige, die Lebensdauer der Schareinheit beeinflussende mechanische Belastung der Schareinheit vermieden werden. Insbesondere erweist sich eine solche Ausgestaltung als vorteilhaft im Hinblick auf eine Verschleißreduzierung. Ferner kann durch eine solche Ausgestaltung vermieden werden, dass es durch eine zu hohe Scharkraft zu einer falschen, insbesondere zu tiefen Ablagetiefe des Säschars kommt, welche zu einer fehlerhaften Aussaat des Saatguts auf der Nutzfläche führen kann.

In diesem Zusammenhang wird ferner vorgeschlagen, dass das Verzögerungssignal zur Reduzierung der Fahrgeschwindigkeit an einen die Fahrgeschwindigkeit erzeugenden Fahrantrieb und/oder an eine Bedienanzeige übermittelt wird. Durch die Übermittlung des Verzögerungssignals an den Fahrantrieb kann eine automatisierte, schnell wirkende Reduzierung der Fahrgeschwindigkeit erreicht werden. Eine Übermittlung des Verzögerungssignals an eine Bedienanzeige ermöglicht auf bedienerfreundliche Art und Weise einen Eingriff durch das Bedienpersonal und erlaubt diesem eine Kontrollmöglichkeit.

In einer weiteren vorteilhaften Weiterbildung der Erfindung wird vorgeschlagen, dass ein Beschleunigungssignal zur Erhöhung der Fahrzeuggeschwindigkeit erzeugt wird, wenn die Scharkraft kleiner als der Grenzwert der Scharkraft und die Bandbreite kleiner als der Grenzwert der Bandbreite ist. Hierdurch kann sichergestellt werden, dass die etwa durch den Fahrmodus vorgegebene Fahrgeschwindigkeit unter Berücksichtigung der Störgrößen stets maximal ist, wodurch die Flächenleistung der Aussaat maximiert werden kann.

Es hat sich in diesem Zusammenhang als vorteilhaft herausgestellt, wenn das Beschleunigungssignal zur Erhöhung der Fahrgeschwindigkeit an den die Fahrgeschwindigkeit erzeugenden Fahrantrieb und/oder an die Bedienanzeige übermittelt wird. Durch die Übermittlung des Beschleunigungssignals an den Fahrantrieb kann eine automatisierte, schnell wirkende Erhöhung der Fahrgeschwindigkeit zur Erhöhung der Flächenleistung erreicht werden. Eine Übermittlung des Beschleunigungssignals an eine Bedienanzeige ermöglicht auf bedienerfreundliche Art und Weise einen einfachen und bedienerfreundlichen Eingriff durch das Bedienpersonal und erlaubt diesem eine Kontrollmöglichkeit.

Es wird vorgeschlagen, dass ein Zwischenspeicher vorgesehen ist, in welchem der Scharkraftverlauf zwischengespeichert wird. Ein solcher Zwischenspeicher ermöglicht eine schnelle und effiziente Analyse des zwischengespeicherten Scharkraftverlaufs. Insbesondere ermöglicht ein Zwischenspeicher einen schnellen Zugriff auf die Messdaten des Scharkraftverlaufs, wodurch die Reaktionszeit der Regelung verbessert werden kann. Vorzugsweise wird der Scharkraftverlauf gemeinsam mit einem GPS-Signal auf dem Zwischenspeicher abgelegt, so dass bei alternierender Arbeitsweise erneut auf die Daten zugegriffen werden kann bspw. zum Vergleich.

Es hat sich ferner als vorteilhaft herausgestellt, wenn das Messintervall eingestellt wird. Eine derartige Ausgestaltung hat sich als besonders recheneffizient erwiesen, da das Messintervall auf die jeweiligen Messbedingungen angepasst werden kann. Insbesondere kann es in diesem Zusammenhang bevorzugt sein, ein möglichst kurzes Messintervall einzustellen, um eine besonders gut auf sich ändernde Bedingungen anpassbare Regelung der Laufruhe zu erhalten. Alternativ kann es auch bevorzugt sein, ein langes Messintervall einzustellen, um die Bandbreite des Scharkraftverlaufs über einen längeren Zeitraum zu erfassen.

In diesem Zusammenhang wird ferner ein Störfilter zum Herausfiltern von Störsignalen aus dem Scharkraftverlauf vorgeschlagen. Ein solcher Störfilter erlaubt eine zuverlässige Vermeidung von Fehlregelungen. Insbesondere können durch einen solchen Störfilter übermäßig erhöhte oder verminderte Werte der Scharkraft sicher aus dem Scharkraftverlauf herausgefiltert werden. Derartige nach Art von Kraftpeaks übermäßig erhöhte oder reduzierte Scharkraftwerte können etwa aus der Überfahrt von auf der Nutzfläche vorhandenen Hindernissen, wie Steinen, Unebenheiten o. Ä. resultieren.

In einer vorteilhaften Weiterbildung der Erfindung wird vorgeschlagen, dass die Scharkraft über einen an der Laufrolle, insbesondere an der Drehachse der Laufrolle, angeordneten Kraftsensor gemessen wird. Eine derartige Anordnung des Kraftsensors ermöglicht eine besondere genaue Messung der auf die Schareinheit wirkenden Scharkraft. Eine zuverlässige Ermittlung der Scharkraft ist eine Grundvoraussetzung für eine effiziente und schnelle Regelung der Laufruhe.

Darüber hinaus wird vorgeschlagen, dass eine Ablagetiefe des Säschars über dessen Position gegenüber der Laufrolle eingestellt wird. Eine derartige Ausgestaltung ermöglicht eine besonderes einfache und bedienerfreundliche grobe Voreinstellung der Ablagetiefe des Säschars. Insbesondere kann die Ablagetiefe des Säschars somit auf vorteilhaft schnelle und einfache Art und Weise an unterschiedliche Grobvorgaben der Ablagetiefe angepasst werden. Eine derartige Grobvorgabe der Ablagetiefe kann etwa aus der Art des Saatguts oder aus der Beschaffenheit der Nutzfläche resultieren.

In einer weiteren vorteilhaften Weiterbildung der Erfindung wird vorgeschlagen, dass die Laufrolle in Fahrtrichtung hinter dem Säschar angeordnet ist. Eine derartige Anordnung hat sich als konstruktiv vorteilhaft im Hinblick auf eine gute Führung des Laufs der Schareinheit auf der Nutzfläche erwiesen, vor allem auch bei hohen Fahrgeschwindigkeiten. Besonders bevorzugt ist es in diesem Zusammenhang, wenn die Laufrolle koaxial in Fahrtrichtung hinter dem Säschar angeordnet ist. Alternativ ist eine Laufrolle denkbar, die vor oder neben dem Säschar angeordnet ist.

Im Hinblick auf eine effiziente Einstellung des Schardrucks hat es sich als vorteilhaft erwiesen, wenn die Schareinheit zur Einstellung des Schardrucks um eine Schwenkachse verschwenkt wird. Eine solche Ausgestaltung hat sich als vorteilhaft im Hinblick auf eine störungsunanfällige, zuverlässige Erzeugung und Einstellung des Schardrucks erwiesen. Insbesondere kann in diesem Zusammenhang bevorzugt sein, dass die Schwenkachse sich quer zur Fahrtrichtung erstreckt.

In diesem Zusammenhang wird ferner vorgeschlagen, dass ein sich entlang der Schwenkachse erstreckender Schwenkträger vorgesehen ist, an welchem eine oder mehrere Schareinheiten angeordnet sind. Der Schardruck kann hierbei auf konstruktiv vorteilhaft einfache Art und Weise durch Verschwenken des Schwenkträgers um die Schwenkachse eingestellt werden. Über eine derartige Anordnung ist das gleichzeitige gleichmäßige Einstellen des Schardrucks an mehreren Schareinheiten möglich, wenn diese segmentweise an dem Schwenkträger angeordnet sind. Falls mehrere Scharträger vorgesehen sind, an welchen jeweils ein einzelner oder eine Gruppe von Schareinheiten angeordnet ist, kann durch das unabhängige Verschwenken der Schwenkträger auch eine Einstellung unterschiedlicher Schardrücke erfolgen, falls sich dies im jeweiligen Anwendungsfall als vorteilhaft herausstellen sollte. Als konstruktiv und kinematisch vorteilhaft hat es sich in diesem Zusammenhang erwiesen, wenn der Schwenkträger zur Einstellung des Schardrucks um die Schwenkachse gedreht wird.

In diesem Zusammenhang ist es ferner bevorzugt, wenn der Schwenkträger über einen hydraulischen Antrieb gedreht wird. Eine derartige Ausgestaltung hat sich als besonders bedienerfreundlich erwiesen. Ferner kann über einen hydraulischen Antrieb eine gleichmäßige und schnell wirkende Schardruckerzeugung erreicht werden.

Zur **Lösung** der vorstehend genannten Aufgabe wird ferner eine Sämaschine zum Ausbringen von Saatgut mit den Merkmalen des Anspruchs 17 vorgeschlagen. Es ergeben sich die im Zusammenhang mit dem Verfahren zur Regelung der Laufruhe einer Schareinheit beschriebenen Vorteile.

Weitere Einzelheiten und Vorteile eines erfindungsgemäßen Verfahrens zur Regelung der Laufruhe einer Schareinheit sowie einer erfindungsgemäßen Sämaschine werden nachfolgend unter Zuhilfenahme der beigefügten Zeichnungen gemäß Fig. 1 bis 5 erläutert. Darin zeigen:
- Fig. 1: eine perspektivische Ansicht einer an einer landwirtschaftlichen Zugmaschine angehängten Sämaschine mit mehreren Schareinheiten;
- Fig. 2: einen schematisch dargestellten, exemplarischen Scharkraftverlauf;
- Fig. 3, 4: perspektivische Ansichten einer Schareinheit, und
- Fig. 5: ein Blockschaltbild eines Verfahrens zur Regelung der Laufruhe einer Schareinheit.

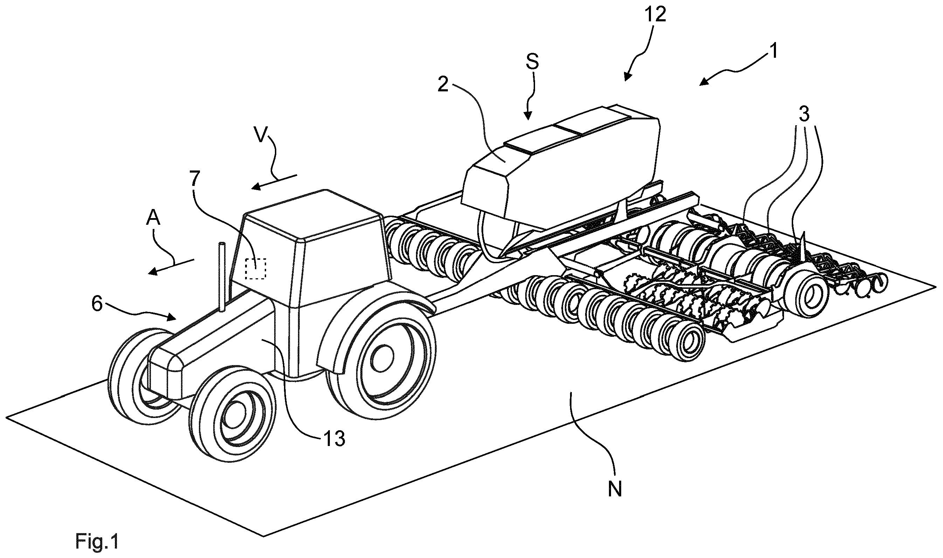

Die Darstellung in Fig. 1 zeigt eine Sämaschine 1 zum Ausbringen von Saatgut S auf einer landwirtschaftlichen Nutzfläche N, beispielsweise einem Acker oder Feld zum Anbau von Getreide. Neben oder alternativ zu Saatgut S kann mit einer solchen Sämaschine 1 auch ein anderes körniges, pulverförmiges oder granulares Material ausgebracht werden, wie etwa ein Düngemittel o. Ä.

Die Sämaschine 1 ist an eine Zugmaschine 13, gemäß Fig. 1 einem Traktor, angehängt und wird zum Ausbringen des Saatguts S mit einer gewissen Fahrgeschwindigkeit V entlang im Wesentlichen parallel zueinander verlaufenden Bahnen in Fahrtrichtung A über die landwirtschaftliche Nutzfläche N gezogen. Alternativ kann die Sämaschine 1 aber auch an die Zugmaschine 13 angebaut oder selbstfahrend, beispielsweise als Roboter oder Roboter mit integrierter Sämaschine, ausgebildet sein. Das Saatgut S ist während des Ausbringens bzw. der Aussaat in einem großvolumigen, tankartigen Vorratsbehälter 2 bevorratet. Bei der Sämaschine 1 handelt es sich um eine Sämaschine 1 zur Volumensaat. Es kann sich aber hierbei auch um eine andere Sämaschine 1, etwa eine Maschine zur Einzelkornsaat, handeln.

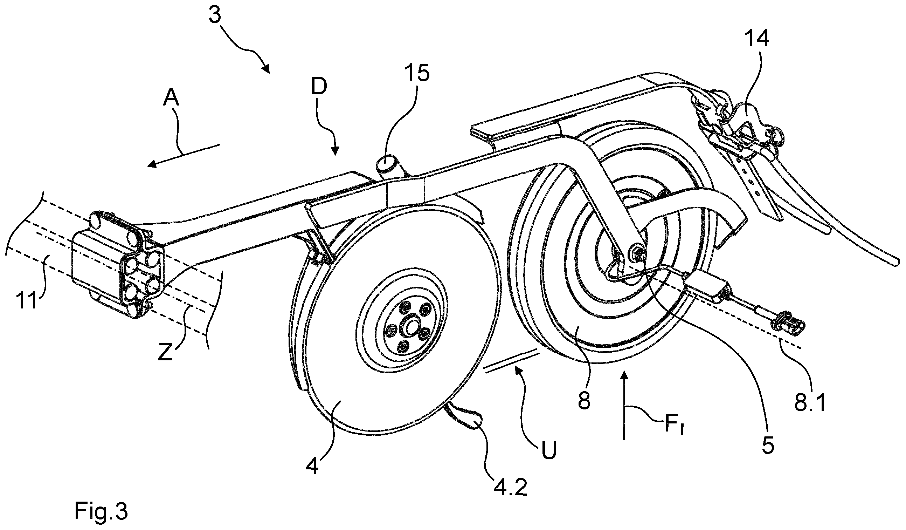

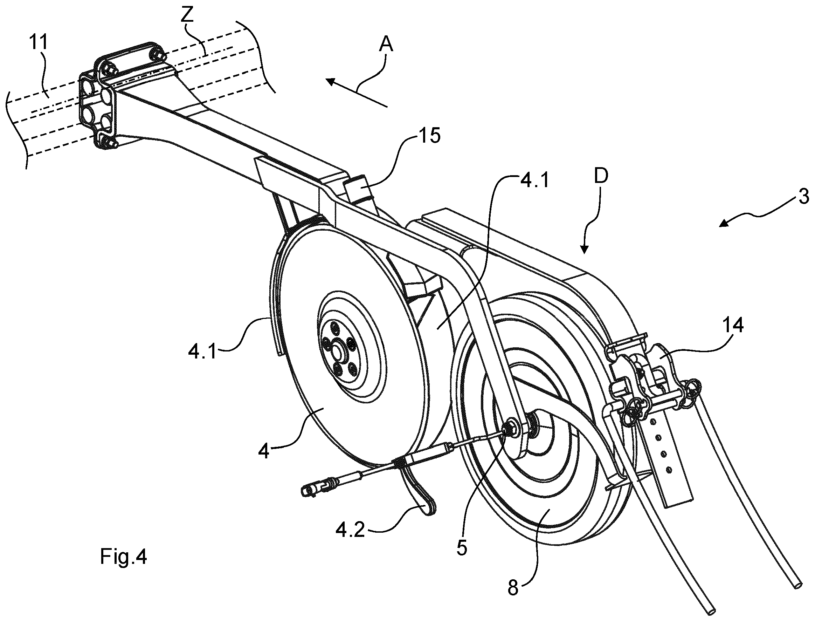

Neben diversen anderen Werkzeugen, Geräten oder Apparaten zur Bodenbearbeitung, insbesondere zur Vorbereitung der Nutzfläche N für die Aussaat, weist die Sämaschine 1 an deren hinteren Ende zahlreiche, parallel zueinander angeordnete Schareinheiten 3 auf. Über die Schareinheiten 3 wird das in dem Vorratsbehälter 2 bevorratete Saatgut S in parallelen Saatreihen in der Nutzfläche N abgelegt. Dabei umfasst eine Schareinheit 3 jeweils ein Säschar 4 zur Erzeugung einer Säfurche U. Gemäß der Darstellung in Fig. 3 ist das Säschar 4 als Doppelscheibensäschar ausgebildet und weist zwei meißelartige, tellerförmige Schneidscheiben 4.1 auf. Die Schneidscheiben 4.1 sind winklig, im speziellen V-förmig zueinander ausgerichtet, drehbar an der Schareinheit 3 gelagert und werden über einen Schardruckaktor mit einem senkrecht zur Nutzfläche N wirkenden Schardruck D auf Nutzfläche N gedrückt. Hierdurch schneiden die Schneidscheiben 4.1 in den Boden und es wird eine sich hinter der Schareinheit 3 erstreckende rillenförmigen Säfurche U erzeugt, deren Tiefe die Ablagetiefe T des Saatguts S bestimmt. Das Säschar 4 kann alternativ auch nur eine Schneidscheibe 4.1 aufweisen. In die erzeugte, in den Figuren nicht abgebildete Säfurche U wird das aus dem Vorratsbehälter 2 beispielsweise über eine pneumatische Förderleitung 15 zuführbare Saatgut S abgelegt, vgl. Fig. 4. Über einen Saatgutniederstreicher 4.2 und einen am hinteren Ende der Schareinheit 3 angeordneten zweizinkigen Striegel 14 wird die Nutzfläche N nach dem Ablegen des Saatguts S in der Säfurche U nachbereitet, vgl. Fig. 14.

In Fahrtrichtung A hinter dem Säschar 4 ist eine Laufrolle 8 angeordnet, über welche die Schareinheit 3 über die Nutzfläche N läuft, vgl. Fig. 4. Alternativ sind auch Konstruktionen denkbar, bei denen auf eine solche, auch als Tiefenführungsrolle bezeichnete Laufrolle 8 verzichtet wird und die Schareinheit 3 ohne Laufrolle 8 über die Nutzfläche N läuft.

Um eine gleichmäßige Ablagetiefe T des Saatguts S sicherzustellen, weist die Sämaschine 1 eine in den Figuren nicht dargestellte Regeleinheit 12 mit einer Schardruckregelung R auf, über welche der auf die Schareinheit 3 wirkende Schardruck D geregelt werden kann. Als Eingangsgröße für die Schardruckregelung R wird die auf die Schareinheit 3 einwirkende Scharkraft F genutzt. Der jeweilige Ist- bzw. Messwert der Scharkraft F_{I} wird über einen an der Laufrolle 8 angeordneten Kraftsensor 8.1 gemessen und an die Schardruckregelung R übermittelt. Alternativ kann die Scharkraft F_{I} auch auf andere Arten bestimmt oder ermittelt werden, etwa über einen an einer anderen Stelle angeordneten Sensor oder durch eine indirekte Bestimmung am Schardruckaktor.

Um eine möglichst große Flächenleistung zu erreichen, ist es in der Praxis wünschenswert, die Sämaschine 1 mit einer möglichst hohen Fahrgeschwindigkeit V über die Nutzfläche N zu fahren. Eine höhere Fahrgeschwindigkeit V geht jedoch häufig mit einer geringeren Laufruhe L einher, welche sich ungünstig auf die Längsverteilung des Saatguts S in der Säfurche U auswirken kann sowie zu erhöhten mechanischen Belastungen der Schareinheit 3 und/oder anderer Komponenten der Sämaschine 1 führen kann. Aus diesem Grund weist die Sämaschine 1 eine Regelung der Laufruhe L der Schareinheit 3 auf, über welche die Laufruhe L zur Erzielung eines möglichst ruhigen Laufs der Schareinheit 3 geregelt werden kann.

Bei der Sämaschine 1 erfolgt die Erfassung der Laufruhe L ohne zusätzliche Sensoren, wie etwa Beschleunigungs- oder Vibrationssensoren, wodurch das entsprechende Verfahren zur Regelung der Laufruhe L vereinfacht wird. Ferner erweist sich das Verfahren wegen der fehlenden zusätzlichen Sensoren und deren Verkabelung auch als störungsunanfälliger, was im Folgenden detailliert erläutert werden wird.

Grundlage des Verfahrens zur Regelung der Laufruhe L ist das Erfassen des Scharkraftverlaufs W sowie das Bestimmen der Bandbreite B_{I} dieses Scharkraftverlaufs W. Die über den Kraftsensor 8.1 gemessene Scharkraft F_{I} wird zur Ermittlung des zeitlichen Scharkraftverlaufs W über ein Messintervall I erfasst und eine Bandbreite B_{I} des Scharkraftverlaufs W wird als Regelgröße bzw. als Rückführgröße zur Regelung der Laufruhe L verwendet was nachfolgend noch näher erläutert werden wird.

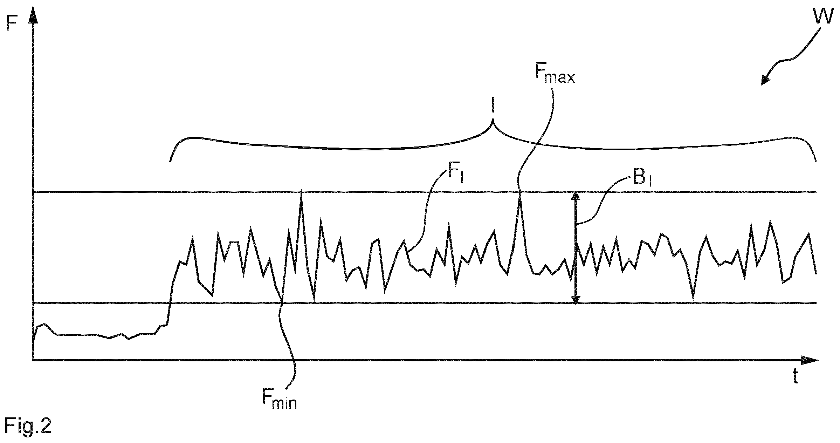

Zunächst soll jedoch anhand der Darstellung eines exemplarischen Scharkraftverlaufs W gemäß Fig. 2 erläutert werden, wie der Ist-Wert der Bandbreite B_{I} bestimmt wird.

In Fig. 2 ist der Verlauf der auf eine Schareinheit 3 wirkenden Scharkraft F_{I} über der Zeit t dargestellt. Zu Beginn, d. h. kurz nach dem Zeitpunkt t=0 ist die Sämaschine 1 im so genannten Vorgewende zum Rangieren der Zugmaschine 13 angehoben, so dass die Schareinheiten 3 die Nutzfläche N nicht berühren. Während dieser Phase befindet sich die Scharkraft F_{I} entsprechend auf einem niedrigen Niveau, welches nicht Eingang in die Erfassung der Bandbreite B_{I} finden soll, um die Regelung der Laufruhe L nicht zu beeinträchtigen. Das Messintervall I zur Erfassung der Bandbreite B_{I} beginnt erst, wenn die Schareinheiten 3 auf die Nutzfläche N aufgesetzt sind und die Aussaat beginnt. Ab diesem Zeitpunkt schwankt die Scharkraft F_{I} während der Aussaat zwischen einer minimalen Scharkraft Fₘᵢₙ und einer maximalen Scharkraft Fₘₐₓ. Die Schwankung der Scharkraft F_{I} resultiert beispielsweise aus Vibrationen oder Erschütterungen der Schareinheit 3 oder anderer Komponenten der Sämaschine 1 oder etwa auch der Beschaffenheit der Nutzfläche N, wie etwa Unebenheit, Oberflächenrauheit, Stellen mit variierender Feuchtigkeit oder unterschiedlichen Eindringwiderständen des Säschars 4 in die Nutzfläche N. Die Schwankung der Scharkraft F_{I} spiegelt die Laufruhe L der Schareinheit 3 wider. Bei einem hypothetischen vollständig ruhigen Lauf der Schareinheit 3 auf der Nutzfläche N würde die Scharkraft F_{I} auf einem gleichmäßigen Niveau über der Zeit t liegen. Als Maß für die im tatsächlichen realen Säbetrieb während der Aussaat auftretenden Schwankungen der Scharkraft F_{I}, und somit für die Laufruhe L, dient die Bandbreite B_{I}. Diese wird aus der Differenz zwischen der im Messintervall I auftretenden maximalen Scharkraft Fₘₐₓ und der im gleichen Messintervall gemessenen minimalen Scharkraft Fₘᵢₙ bestimmt, vgl. Fig. 2. Die Bandbreite B_{I} kann auch als Amplitude der Scharkraft F_{I} bzw. des Scharkraftverlaufs W bezeichnet werden. Alternativ oder zusätzlich können auch weitere Kenngrößen des Scharkraftverlaufs W, wie etwa die Frequenz der Schwankungen der Scharkraft F_{I} als Maß bzw. Messgröße für die Laufruhe L verwendet werden.

Das Messintervall I wird dabei eingestellt und kann hinsichtlich seiner Dauer angepasst werden. Im Hinblick auf eine möglichst gute, sensitiv auf wechselnde Bedingungen reagierende Regelung kann ein kürzeres Messintervall I bevorzugt sein, nach welchem eine Anpassung der Laufruhe L erfolgt. Alternativ kann auch ein längeres Messintervall I vorteilhaft sein, über welches der Scharkraftverlauf W erfasst wird, wenn die jeweilige Situation der Aussaat, insbesondere die Beschaffenheit des Saatguts S, der Sämaschine 1 oder der Nutzfläche N dies erlauben.

Der Scharkraftverlauf W wird in einem Zwischenspeicher 9 zwischengespeichert, vgl. Fig. 2. Die Speicherkapazität des Zwischenspeichers 9 kann dabei auf die maximale Länge des einstellbaren Messintervalls I angepasst sein. Ferner ist ein Störfilter 10 zum Herausfiltern von Störsignalen aus dem Scharkraftverlauf W vorgesehen. Über den Störfilter 10 können Spitzen bzw. Peaks der gemessenen Scharkraft F_{I}, welche etwa aus der Überfahrt eines auf der Nutzfläche N liegenden Steins o. Ä. resultieren können und die Beträge der maximalen Scharkraft Fₘₐₓ bzw. der minimalen Scharkraft Fₘᵢₙ stark beeinflussen können, herausgefiltert werden. Somit werden diese unregelmäßig auftretenden Störsignale nicht zur Bestimmung der Bandbreite B_{I} herangezogen, so dass deren Wert nicht verfälscht wird. Alternativ oder zusätzlich können auch andere Filter zum Herausfiltern von Störsignalen aus dem Scharkraftverlauf W vorgesehen sein, falls sich Herausstellen sollte, dass derartige Störsignalen die Regelung der Laufruhe L beeinflussen.

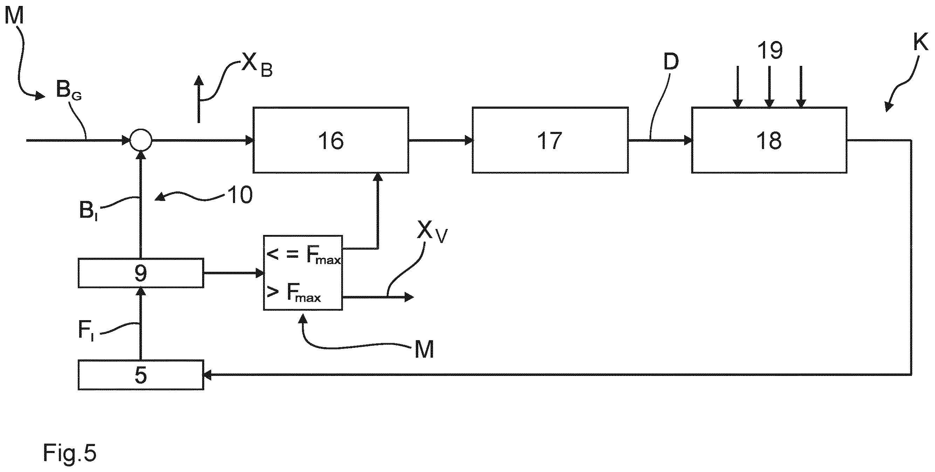

Die vorstehend erläuterte Bestimmung der Bandbreite B_{I} aus dem gemessenen und in dem Zwischenspeicher 9 abgespeicherten Scharkraftverlauf W bildet die Grundlage für die Regelung der Laufruhe L. Die Regelung der Laufruhe L erfolgt über einen Regelkreis K, welcher in Fig. 5 schematisch als Blockschaltbild abgebildet ist. Im Folgenden wird das Verfahren zur Regelung der Laufruhe L anhand der Darstellung in Fig. 5 erläutert.

Als Führungsgröße des Regelkreises K wird ein Grenzwert B_{G} der Bandbreite B verwendet. Dieser vorgegebene Grenzwert B_{G} der Bandbreite B wird zur Bestimmung der Regelabweichung mit dem gemessenen Ist-Wert der Bandbreite B_{I} verglichen. Die durch den Vergleich zwischen der Führungsgröße, d. h. dem Grenzwert B_{G} der Bandbreite, und der Rückführgröße, d. h. der tatsächliche Bandbreite B_{I}, ermittelte Regeldifferenz wird einem Regler 16 zugeführt. Der Regler 16 dient der Bildung der Steuergröße des Regelkreises K, welche im vorliegenden Fall ein Wert des Schardrucks D ist. Als zusätzliche Bedingung für den Regler 16 wird ein Grenzwert F_{G} der Scharkraft F und/oder ein Grenzwert der Fahrgeschwindigkeit V vorgegeben. Ferner sind je nach Ausstattung der Sämaschine 1 und der jeweiligen Situation der Aussaat weitere Bedingungen denkbar, welche dem Regler 16 vorgegeben werden können.

Bei dem Verfahren zur Regelung der Laufruhe L wird der Schardruck D zur Verbesserung der Laufruhe L dann erhöht, wenn die tatsächliche Bandbreite B_{I} größer dem Grenzwert B_{G} der Bandbreite B und die Scharkraft F_{I} kleiner oder gleich dem Grenzwert F_{G} der Scharkraft F ist. Dies bedeutet, dass eine Erhöhung des Schardrucks D zur Verbesserung der Laufruhe L nur dann durchgeführt wird, wenn der Messwert B_{I} der Bandbreite B den vorgegebenen Grenzwert B_{G} der Bandbreite B überschreitet. Als Randbedingung für eine mögliche Erhöhung des Schardrucks D darf der Mittelwert der Scharkraft F_{M}, welcher als über ein Messintervall I ermittelter, durchschnittlicher Wert der Scharkraft F_{I} aus dem über den Kraftsensor 5 gemessenen Scharkraftverlauf W bestimmt wird, einen vorgegebenen Grenzwert F_{G} der Scharkraft F nicht überschreiten. Die Vorgabe eines Grenzwerts F_{G} der Scharkraft F dient dazu, die mechanische Belastung der Sämaschine 1 und insbesondere der Schareinheit 3 in einem sicheren Bereich zu halten, in welchem keine Beschädigungen und vor allem kein Ausfall zu erwarten sind. Zudem wird der Aufgang der Saat begünstigt.

Wenn der Mittelwert F_{M} der Scharkraft den Grenzwert F_{G} der Scharkraft übersteigt, wird der Schardruck D nicht mehr erhöht. Stattdessen wird ein Verzögerungssignal X_{V} zur Reduzierung der Fahrgeschwindigkeit V erzeugt. Dieses Verzögerungssignal X_{V} wird zur Reduzierung der Fahrgeschwindigkeit V an einen die Fahrgeschwindigkeit V erzeugenden Fahrantrieb 6 übermittelt. Bei dem Fahrantrieb 6 handelt es sich um den Fahrantrieb der Zugmaschine 13. In dem Fahrantrieb 6 wird aufgrund des Verzögerungssignals X_{V} automatisch eine Reduzierung der Fahrgeschwindigkeit V veranlasst. Alternativ oder zusätzlich kann das Verzögerungssignal Xv an eine von dem Fahrer der Zugmaschine 13 einsehbare, nach Art eines Bildschirms ausgebildete Bedienanzeige 7 übermittelt werden. Durch einen entsprechenden Hinweis oder eine Fehlermeldung auf der Bedienanzeige 7 kann der Fahrer der Zugmaschine 13 aufgefordert werden, die Fahrgeschwindigkeit V zu reduzieren, was insbesondere bei einfacher ausgestatten Zugmaschinen 13 ohne automatisiert gesteuerten Fahrantrieb 6 vorgesehen sein kann.

Wenn der Mittelwert F_{M} der Scharkraft kleiner als der Grenzwert F_{G} der Scharkraft F ist und die gemessene Bandbreite B_{I} kleiner als der Grenzwert B_{G} der Bandbreite B ist, wird ein Beschleunigungssignal X_{B} zur Erhöhung der Fahrgeschwindigkeit V erzeugt. Dieses Beschleunigungssignal X_{B} wird je nach Ausstattung der Zugmaschine 13 zur automatischen Beschleunigung an den die Fahrgeschwindigkeit V erzeugenden Fahrantrieb 6 und/oder an eine vom Fahrer bzw. dem Bedienpersonal der Zugmaschine 13 einsehbare Bedienanzeige 7 übermittelt, worauf der Fahrer manuell die Fahrgeschwindigkeit V erhöhen kann.

Auf der Regelstrecke 18 wirken verschiedene Störgrößen 19 auf den in dem Regler 16 gebildeten Wert des Schardrucks D ein. Hierbei kann es sich beispielsweise um Parameter der Nutzfläche N, wie etwa deren Bodenfeuchtigkeit, Eindringwiderstand, Uneben- oder Rauheit oder eine sonstige Beschaffenheit handeln. Ferner kann auch die Fahrgeschwindigkeit V der Sämaschine 1 eine solche Störgröße 19 sein. Darüber hinaus können Parameter des Säschars 4, wie etwa konstruktive Besonderheiten, dessen Verschleißzustand oder eine spezielle Ausstattung, als Störgrößen 19 berücksichtigt werden.

Der Grenzwert B_{G} der Bandbreite B und der Grenzwert F_{G} der Scharkraft F sind in einem Fahrmodus M der Sämaschine 1 hinterlegt. Hierbei handelt es sich beispielsweise um empirisch ermittelte Erfahrungswerte, welche für gewisse Bedingungen, wie etwa die Art oder Beschaffenheit des Saatguts S, die Beschaffenheit der Nutzfläche N oder die Bodenvorbereitung vor der Aussaat (d. h., ob es sich um eine Pflugsaat, eine Mulchsaat oder eine Direktsaat handelt) in unterschiedlichen Fahrmodi M hinterlegt sind. Der entsprechende Fahrmodus M kann durch das Bedienpersonal ausgewählt und eingestellt werden. Alternativ ist auch eine automatische Einstellung des Fahrmodus M oder der Grenzwerte B_{G}, F_{G}, V o. Ä. denkbar.

Über den an der Drehachse 8.1 der Laufrolle 8 angeordneten Kraftsensor 5 wird, wie bereits vorstehend erläutert, die jeweils aktuell wirkende Scharkraft F_{I}, d. h., die Aufstandskraft der Schareinheit 3 auf der Nutzfläche N, gemessen. Der Messwert der Scharkraft F_{I} wird zurückgeführt und im Zwischenspeicher 9, welcher einen Rechner aufweist, als Scharkraftverlauf W für das eingestellte Messintervall I zwischengespeichert. Durch Auswertung des Scharkraftverlaufs W wird ein neuer Messwert B_{I} der Bandbreite B ermittelt, welcher als neue Rückführgröße zum Vergleich mit dem Grenzwert B_{G} der Bandbreite B zurückgeführt wird. Der Regelkreis K wird erneut durchlaufen.

Im Folgenden soll anhand der Darstellungen in Fig. 3 und 4 die Erzeugung und Anpassung des auf die Schareinheit 3 wirkenden Schardrucks D erläutert werden. Gemäß der schematischen Darstellung der Regelung der Laufruhe L in Fig. 5 wird der Schardruck D in dem Schardrucksystem 17 erzeugt. Wie dies der Darstellung in Fig. 3 entnehmbar ist, ist die Schareinheit 3 zur Erzeugung des Schardrucks D um eine sich quer zur Fahrtrichtung A erstreckende Schwenkachse Z schwenkbar gelagert. Entlang der Schwenkachse Z erstreckt sich ein in den Figuren nicht dargestellter, nach Art eines Profils oder Rohrs ausgebildeter Schwenkträger 11, an welchem jeweils mehrere, parallel zueinander angeordnete Schareinheiten 3 elastisch über die Lagerelemente verdrehbar angelenkt sind. Durch Drehen des Schwenkträgers 11 um die Schwenkachse Z kann der auf die damit verbundenen Schareinheiten 3 wirkende Schardruck D eingestellt werden. Je nach Drehwinkel um die Schwenkachse Z können unterschiedliche Beträge des Schardrucks D eingestellt werden. Zum Antrieb der Drehbewegungen des Schwenkträgers 11 ist ein hydraulischer Antrieb vorgesehen. Alternativ kann es sich hierbei auch um einen anderen Antrieb handeln. Über die vorstehend beschriebene Erzeugung des Schardrucks D kann beispielsweise der im Regler 16 gebildete Wert des Schardrucks D eingestellt werden. Ein höherer Wert des Schardrucks D kann dabei ein tieferes Eindringen der Schneidscheiben 4.1 des Säschars 4 in die Nutzfläche und somit eine tiefere Säfurche U bewirken, wodurch eine größere Ablagetiefe T für das Saatgut S eingestellt werden kann. Neben der vorstehend beschriebenen Methode zur Erzeugung des Schardrucks D über die Rotation des Schwenkträgers 11 sind auch anderer Methoden denkbar, wie beispielsweise die Anordnung von Schardruckaktoren direkt an der Schareinheit 3 bzw. dem Säschar o. Ä.

In Fahrtrichtung A koaxial hinter dem Säschar 4 ist die Laufrolle 8 angeordnet, welche auf der Nutzfläche N läuft. Über die relative Positionierung der Laufrolle 8 gegenüber dem Säschar 4, insbesondere in vertikaler Richtung, kann eine grobe Voreinstellung der Ablagetiefe T für das Saatgut S eingestellt werden. Die Feineinstellung der Ablagetiefe T erfolgt über ein Verkippen des Säschars 4.

Das vorstehend beschriebene Verfahren zur Regelung der Laufruhe L und die Sämaschine 1 mit einer Regelung der Laufruhe L zeichnen sich dadurch aus, dass die Erfassung der Laufruhe L auf einfache Art und Weise ohne zusätzliche Sensoren möglich ist. Ferner erweisen sich das Verfahren und die Sämaschine 1 auch als störungsunanfälliger, da auf zusätzliche Beschleunigungssensoren verzichtet werden kann.

### Bezugszeichenliste:

- 1: Sämaschine
- 2: Vorratsbehälter
- 3: Schareinheit
- 4: Säschar
- 4.1: Schneidscheibe
- 4.2: Saatgutniederstreicher
- 5: Kraftsensor
- 6: Fahrantrieb
- 7: Bedienanzeige
- 8: Laufrolle
- 8.1: Drehachse
- 9: Zwischenspeicher
- 10: Störfilter
- 11: Schwenkträger
- 12: Regeleinheit
- 13: Zugmaschine
- 14: Striegel
- 15: Förderleitung
- 16: Regler
- 17: Schardrucksystem
- 18: Regelstrecke
- 19: Störgröße

- A: Fahrtrichtung
- B: Bandbreite
- B_{I}: Bandbreite, Messwert
- B_{G}: Bandbreite, Grenzwert
- D: Schardruck
- F: Scharkraft
- F_{G}: Scharkraft, Grenzwert
- F_{I}: Scharkraft, Messwert
- F_{M}: Scharkraft, Mittelwert
- Fₘₐₓ: maximale Scharkraft
- Fₘᵢₙ: minimale Scharkraft
- I: Messintervall
- K: Regelkreis
- L: Laufruhe
- M: Fahrmodus
- N: Nutzfläche
- R: Schardruckregelung
- S: Saatgut
- T: Ablagetiefe
- t: Zeit
- U: Säfurche
- V: Fahrgeschwindigkeit
- W: Scharkraftverlauf
- X_{B}: Beschleunigungssignal
- X_{V}: Verzögerungssignal
- Z: Schwenkachse

## Patentansprüche

1. Verfahren zur Regelung der Laufruhe (L) einer einen Säschar (4), und vorzugsweise eine Laufrolle (8), aufweisenden Schareinheit (3), die zur Erzeugung einer Säfurche (U) über das Säschar (4) mit einem einstellbaren Schardruck (D) auf eine landwirtschaftliche Nutzfläche (N) gedrückt, und insbesondere über die Laufrolle (8), mit einer Fahrgeschwindigkeit (V) über die landwirtschaftliche Nutzfläche (N) bewegt wird, bei welchem eine auf die Schareinheit (3), insbesondere auf die Laufrolle (8), einwirkende Scharkraft (F_{I}) gemessen wird,
**dadurch gekennzeichnet, dass** die Scharkraft (F_{I}) zur Ermittlung eines zeitlichen Scharkraftverlaufs (W) über ein Messintervall (I) erfasst wird und eine Bandbreite (B_{I}) des Scharkraftverlaufs (W) als Regelgröße zur Regelung der Laufruhe (L) verwendet wird.

2. Verfahren nach Anspruch 1, **dadurch gekennzeichnet, dass** die Bandbreite (B_{I}) aus der Differenz zwischen einer maximalen Scharkraft (Fₘₐₓ) und einer minimalen Scharkraft (Fₘᵢₙ) des Scharkraftverlaufs (W) bestimmt wird.

3. Verfahren nach einem der Ansprüche 1 oder 2, **dadurch gekennzeichnet, dass** die Regelung der Laufruhe (L) über einen eine Regelstrecke (18) aufweisenden Regelkreis (K) mit dem Schardruck (D) als Stellgröße erfolgt.

4. Verfahren nach Anspruch 3, dass ein Grenzwert (B_{G}) der Bandbreite (B) als eine Führungsgröße des Regelkreises (K) verwendet wird, welche zur Bestimmung einer Regelabweichung mit der Bandbreite (B) verglichen wird.

5. Verfahren nach Anspruch 4, **dadurch gekennzeichnet, dass** die Regelabweichung einem Regler (16) zugeführt wird, in welchem ein Wert des Schardrucks (D) als Steuergröße gebildet wird.

6. Verfahren nach einem der vorhergehenden Ansprüche, **dadurch gekennzeichnet, dass** mindestens ein Parameter der Nutzfläche (N) und/oder die Fahrgeschwindigkeit (V) und/oder mindestens ein Scharparameter als Störgrößen berücksichtigt werden.

7. Verfahren nach einem der vorhergehenden Ansprüche, **dadurch gekennzeichnet, dass** ein Grenzwert (F_{G}) der Scharkraft (F) und/oder die Fahrgeschwindigkeit (V) als Bedingung, insbesondere für den Regler (16), verwendet werden.

8. Verfahren nach einem der Ansprüche 4, 5 oder 7, **dadurch gekennzeichnet, dass**
der Grenzwert (B_{G}) der Bandbreite (B) und/oder der Grenzwert (F_{G}) der Scharkraft (F) in einem Fahrmodus (M) hinterlegt sind und durch Auswahl des Fahrmodus (M) eingestellt werden.

9. Verfahren nach den Ansprüchen 4 oder 5, und 7, oder nach dem Anspruch 8, **dadurch gekennzeichnet, dass**
der Schardruck (D) zur Verbesserung der Laufruhe (L) erhöht wird, wenn die Bandbreite (B_{I}) größer dem Grenzwert (B_{G}) der Bandbreite (B) und die Scharkraft (F_{I}) kleiner oder gleich dem Grenzwert (F_{G}) der Scharkraft (F) ist.

10. Verfahren nach einem der Ansprüche 7 bis 9, **dadurch gekennzeichnet, dass**
ein Verzögerungssignal (X_{V}) zur Reduzierung der Fahrgeschwindigkeit (V) erzeugt wird, wenn die Scharkraft (F_{I}) größer als der Grenzwert (F_{G}) der Scharkraft (F) ist.

11. Verfahren nach den Ansprüchen 4 oder 5, und 7, oder nach einem der Ansprüche 8-10, **dadurch gekennzeichnet, dass**
ein Beschleunigungssignal (X_{B}) zur Erhöhung der Fahrgeschwindigkeit (V) erzeugt wird, wenn die Scharkraft (F_{I}) kleiner als der Grenzwert (F_{G}) der Scharkraft (F) und die Bandbreite (B_{I}) kleiner als der Grenzwert (B_{G}) der Bandbreite (B) ist.

12. Verfahren nach einem der vorhergehenden Ansprüche, **gekennzeichnet durch** einen Zwischenspeicher (9), in welchem der Scharkraftverlauf (W) zwischengespeichert wird.

13. Verfahren nach einem der vorhergehenden Ansprüche, **dadurch gekennzeichnet, dass** das Messintervall (I) eingestellt wird.

14. Verfahren nach einem der vorhergehenden Ansprüche, **dadurch gekennzeichnet, dass** die Scharkraft (F_{I}) über einen an der Laufrolle (8), insbesondere an der Drehachse (8.1) der Laufrolle (8) angeordneten Kraftsensor (6) gemessen wird.

15. Verfahren nach einem der vorhergehenden Ansprüche, **dadurch gekennzeichnet, dass** die Schareinheit (3) zur Einstellung des Schardrucks (D) um eine Schwenkachse (Z) verschwenkt wird.

16. Verfahren nach Anspruch 15, **gekennzeichnet durch** einen sich entlang der Schwenkachse (Z) erstreckenden Schwenkträger (11), an welchem eine oder mehrere Schareinheiten (3) angeordnet sind.

17. Sämaschine zum Ausbringen von Saatgut (S) mit mehreren Schareinheiten (3), die jeweils einen Säschar (4) zur Erzeugung einer Säfurche (U) in einer landwirtschaftlichen Nutzfläche (N), und vorzugsweise eine Laufrolle (8), aufweisen, über welche die Schareinheiten (3) mit einer Fahrgeschwindigkeit (V) auf der landwirtschaftliche Nutzfläche (N) bewegbar sind, mit Kraftsensoren (5) zur Messung einer auf die Schareinheiten (3), insbesondere auf die Laufrollen (8), einwirkenden Scharkraft (F_{I}) und einer Regeleinheit (12) zur Regelung der Laufruhe (L) der Schareinheiten (3), **dadurch gekennzeichnet, dass** die Regeleinheit (12) konfiguriert ist, die Scharkraft (F_{I}) zur Ermittlung eines zeitlichen Scharkraftverlaufs (W) über ein Messintervall (I) zu erfassen und die Bandbreite (B_{I}) des Scharkraftverlaufs (W) als Regelgröße zur Regelung der Laufruhe (L) zu verwenden.

## Claims

1. Method for controlling the smooth running (L) of a coulter unit (3) comprising a seed coulter (4) and preferably a roller (8), which coulter unit is pressed onto agricultural land (N) at an adjustable coulter pressure (D) in order to produce a seed furrow (U) by means of the seed coulter (4), and in particular is moved over the agricultural land (N) at a traveling speed (V) by means of the roller (8), wherein a coulter force (F_{I}) acting on the coulter unit (3), in particular on the roller (8), is measured,
**characterized in that** the coulter force (F_{I}) is detected over a measurement interval (I) in order to ascertain a temporal coulter force curve (W), and a bandwidth (B_{I}) of the coulter force curve (W) is used as a controlled variable for controlling the smooth running (L).

2. Method according to claim 1, **characterized in that** the bandwidth (B_{I}) is determined from the difference between a maximum coulter force (Fₘₐₓ) and a minimum coulter force (Fₘᵢₙ) of the coulter force curve (W).

3. Method according to either of claims 1 or 2, **characterized in that** the smooth running (L) is controlled by means of a control loop (K) having a controlled system (18), where the coulter pressure (D) is a manipulated variable.

4. Method according to claim 3, that a limit value (B_{G}) of the bandwidth (B) is used as a reference variable of the control loop (K), which reference variable is compared with the bandwidth (B) to determine a control deviation.

5. Method according to claim 4, **characterized in that** the control deviation is fed to a controller (16) in which a value of the coulter pressure (D) is formed as a control variable.

6. Method according to any of the preceding claims, **characterized in that** at least one parameter of the land (N) and/or the traveling speed (V) and/or at least one coulter parameter are taken into account as disturbance variables.

7. Method according to any of the preceding claims, **characterized in that** a limit value (F_{G}) of the coulter force (F) and/or the traveling speed (V) are used as a condition, in particular for the controller (16).

8. Method according to any of claims 4, 5 or 7, **characterized in that** the limit value (B_{G}) of the bandwidth (B) and/or the limit value (F_{G}) of the coulter force (F) are stored in a traveling mode (M) and can be set by selecting the traveling mode (M).

9. Method according to claims 4 or 5, and 7, or according to claim 8, **characterized in that** the coulter pressure (D) is increased to improve the smooth running (L) when the bandwidth (B_{I}) is greater than the limit value (B_{G}) of the bandwidth (B) and the coulter force (F_{I}) is less than or equal to the limit (F_{G}) of the coulter force (F).

10. Method according to any of claims 7 to 9, **characterized in that** a delay signal (Xv) for reducing the traveling speed (V) is generated when the coulter force (F_{I}) is greater than the limit value (F_{G}) of the coulter force (F).

11. Method according to claims 4 or 5, and 7, or according to any of claims 8 to 10, **characterized in that** an acceleration signal (X_{B}) for increasing the traveling speed (V) is generated when the coulter force (F_{I}) is less than the limit value (F_{G}) the coulter force (F) and the bandwidth (B_{I}) is less than the limit value (B_{G}) of the bandwidth (B).

12. Method according to any of the preceding claims, **characterized by** a temporary storage device (9) in which the coulter force curve (W) is temporarily stored.

13. Method according to any of the preceding claims, **characterized in that** the measurement interval (I) is set.

14. Method according to any of the preceding claims, **characterized in that** the coulter force (F_{I}) is measured by means of a force sensor (6) arranged on the roller (8), in particular on the axis of rotation (8.1) of the roller (8).

15. Method according to any of the preceding claims, **characterized in that** the coulter unit (3) is pivoted about a pivot axis (Z) to set the coulter pressure (D).

16. Method according to claim 15, **characterized by** a pivot support (11), extending along the pivot axis (Z), on which pivot support one or more coulter units (3) are arranged.

17. Seed drill for spreading seed (S), which seed drill comprises a plurality of coulter units (3) which each have a seed coulter (4) for producing a seed furrow (U) in agricultural land (N), and preferably a roller (8) by means of which the coulter units (3) can be moved at a traveling speed (V) on the agricultural land (N), and which seed drill comprises force sensors (5) for measuring a coulter force (F_{I}) acting on the coulter units (3), in particular on the rollers (8), and a control unit (12) for controlling the smooth running (L) of the coulter units (3), **characterized in that** the control unit (12) is designed to detect the coulter force (F_{I}) in order to ascertain a temporal coulter force curve (W) over a measurement interval (I) and to use the bandwidth (B_{I}) of the coulter force curve (W) as a controlled variable for controlling the smooth running (L).

## Revendications

1. Procédé pour la régulation du fonctionnement silencieux (L) d'une unité à soc (3) présentant un soc semeur (4), et de préférence un galet de roulement (8), laquelle unité à soc, pour la production d'un sillon de semis (U), est pressée sur une surface agricole utile (N) par l'intermédiaire du soc semeur (4) avec une pression d'enterrage de soc (D) réglable, et est déplacée, en particulier par l'intermédiaire du galet de roulement (8), à une vitesse de déplacement (V) sur la surface agricole utile (N), dans lequel une force de soc (F_{I}) agissant sur l'unité à soc (3), en particulier sur le galet de roulement (8), est mesurée,
**caractérisé en ce que** la force de soc (F_{I}) est détectée pour déterminer une évolution de force de soc (W) temporelle sur un intervalle de mesure (I) et une largeur de bande (Bi) de l'évolution de force de soc (W) est utilisée comme grandeur de régulation pour la régulation du fonctionnement silencieux (L).

2. Procédé selon la revendication 1, **caractérisé en ce que** la largeur de bande (Bi) est déterminée à partir de la différence entre une force de soc maximale (Fₘₐₓ) et une force de soc minimale (Fₘᵢₙ) de l'évolution de force de soc (W).

3. Procédé selon l'une des revendications 1 ou 2, **caractérisé en ce que** la régulation du fonctionnement silencieux (L) est effectuée par l'intermédiaire d'un circuit de régulation (K) présentant un tronçon de régulation (18) avec la pression d'enterrage de soc (D) comme grandeur de réglage.

4. Procédé selon la revendication 3, en ce qu'une valeur limite (B_{G}) de la largeur de bande (B) est utilisée comme grandeur de référence du circuit de régulation (K), laquelle grandeur de référence est comparée avec la largeur de bande (B) pour déterminer un écart de régulation.

5. Procédé selon la revendication 4, **caractérisé en ce que** l'écart de régulation est amené à un régulateur (16) dans lequel une valeur de la pression d'enterrage de soc (D) est formée comme grandeur de commande.

6. Procédé selon l'une des revendications précédentes,
**caractérisé en ce qu'**au moins un paramètre de la surface utile (N) et/ou la vitesse de déplacement (V) et/ou au moins un paramètre de soc sont pris en compte comme grandeurs perturbatrices.

7. Procédé selon l'une des revendications précédentes,
**caractérisé en ce qu'**une valeur limite (F_{G}) de la force de soc (F) et/ou la vitesse de déplacement (V) sont utilisées comme condition, en particulier pour le régulateur (16).

8. Procédé selon l'une des revendications 4, 5 ou 7, **caractérisé en ce que** la valeur limite (B_{G}) de la largeur de bande (B) et/ou la valeur limite (F_{G}) de la force de soc (F) sont enregistrées dans un mode de déplacement (M) et sont réglées par sélection du mode de déplacement (M).

9. Procédé selon les revendications 4 ou 5, et 7, ou selon la revendication 8, **caractérisé en ce que** la pression d'enterrage de soc (D) est augmentée pour améliorer le fonctionnement silencieux (L) lorsque la largeur de bande (B_{I}) est supérieure à la valeur limite (B_{G}) de la largeur de bande (B) et que la force de soc (F_{I}) est inférieure ou égale à la valeur limite (F_{G}) de la force de soc (F).

10. Procédé selon l'une des revendications 7 à 9, **caractérisé en ce qu'**un signal de décélération (Xv) est généré pour réduire la vitesse de déplacement (V) lorsque la force de soc (F_{I}) est supérieure à la valeur limite (F_{G}) de la force de soc (F).

11. Procédé selon les revendications 4 ou 5, et 7, ou selon l'une des revendications 8 à 10, **caractérisé en ce qu'**un signal d'accélération (X_{B}) est généré pour augmenter la vitesse de déplacement (V) lorsque la force de soc (F_{I}) est inférieure à la valeur limite (F_{G}) de la force de soc (F) et que la largeur de bande (B_{I}) est inférieure à la valeur limite (B_{G}) de la largeur de bande (B).

12. Procédé selon l'une des revendications précédentes, **caractérisé par** une mémoire temporaire (9) dans laquelle l'évolution de force de soc (W) est mémorisée temporairement.

13. Procédé selon l'une des revendications précédentes,
**caractérisé en ce que** l'intervalle de mesure (I) est réglé.

14. Procédé selon l'une des revendications précédentes,
**caractérisé en ce que** la force de soc (F_{I}) est mesurée par l'intermédiaire d'un capteur de force (6) disposé sur le galet de roulement (8), en particulier sur l'axe de rotation (8.1) du galet de roulement (8).

15. Procédé selon l'une des revendications précédentes,
**caractérisé en ce que** l'unité à soc (3) est pivotée autour d'un axe de pivotement (Z) pour le réglage de la pression d'enterrage de soc (D).

16. Procédé selon la revendication 15, **caractérisé par** un support pivotant (11) s'étendant le long de l'axe de pivotement (Z) et sur lequel sont disposées une ou plusieurs unités à socs (3).

17. Semoir pour la distribution de semences (S), comportant plusieurs unités à socs (3) qui présentent respectivement un soc semeur (4) pour la production d'un sillon de semis (U) dans une surface agricole utile (N), et de préférence un galet de roulement (8), par l'intermédiaire duquel les unités à socs (3) peuvent être déplacées à une vitesse de déplacement (V) sur la surface agricole utile (N), comportant des capteurs de force (5) pour la mesure d'une force de soc (F_{I}) exercée sur les unités à socs (3), en particulier sur les galets de roulement (8), et une unité de régulation (12) pour la régulation du fonctionnement silencieux (L) des unités à socs (3), **caractérisé en ce que** l'unité de régulation (12) est configurée pour détecter la force de soc (F_{I}) pour la détermination d'une évolution de force de soc (W) temporelle sur un intervalle de mesure (I) et pour utiliser la largeur de bande (B_{I}) de l'évolution de force de soc (W) comme grandeur de régulation pour la régulation du fonctionnement silencieux (L).
